(19) Europäisches Patentamt
European Patent Office
Office européen des brevets

(11) **EP 2 749 418 A1**

(12) **EUROPEAN PATENT APPLICATION**

(43) Date of publication:
**02.07.2014 Bulletin 2014/27**

(51) Int Cl.:
**B41F 33/00** (2006.01)   **G06K 19/06** (2006.01)

(21) Application number: **12386026.4**

(22) Date of filing: **31.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **P. Dimitropoulos - Electronic Systems and Software Applications S.A.**
**Trading Name: SENSAP SA**
**18346 Moschato/Athens (GR)**

(72) Inventor: **Panagiotis, Dimitropoulos D.**
**14564 Kifissia/Athens (GB)**

(54) **Print fidelity control method and device in production lines of solid and corrugated carton boxes, and advertising displays made of paper**

(57) Print fidelity control method in production lines of solid and corrugated carton boxes and in advertising displays made of paper, which comprises photographing with digital cameras of colored barcode symbols of the DATAMATRIX type (10) contained within a frame (9) of a photograph taken of the print layout and decoding the same with a system of qualitative characterization, which detects a marginally imperfect alignment of the monochrome images constituting the overall colored image and a marginal loss of print fidelity of its constituent colors. The qualitative characterization system includes means of performance of measurements characteristic of the print fidelity parameter on the one hand, such as of the average value of the contrast of dark or light cells or of their difference or of the standard deviation of these values, and means of performance of measurements characteristics of the parameter of the degree of alignment between the monochrome, individual images, such as of the standard deviation of the position of dark cells from their ideal position within the matrix of each DATAMATRIX symbol and means for decoding, comparing and acceptance of DATAMATRIX symbols if and when the measured values lie within the limits of standard predetermined values.

Fig. 5

## Description

### FIELD OF THE ART

The present invention discloses a photographic method for measuring the fidelity of printing against a printing standard of pap\er packaging products, namely in solid and in all kinds of corrugated carton boxes for packaging food, beverages, pharmaceuticals, cosmetics and cigarettes, and advertising stands and displays made of paper, such fidelity characterizing the degree of perfection of printing in which sheets of solid or corrugated, primary or recycled, single or multiple, bleached or coloured paper, being the raw material, are being processed into these products in automatic or non-automatic (lithography or rotogravure printing machines. The device employed in the implementation of the disclosed method on the one hand controls: a) the fidelity of printing the constituent colors of the authentic colored image, and on the other hand b) the degree of alignment between the monochrome, individual images making up the same, such quality parameters being achieved during the lithographic or rotogravure printing process of paper. The device implementing the disclosed method carries out the abovementioned controls indirectly through photographing, decoding and qualitative characterization of colored symbols of a two-dimensional barcode of the DATAMATRIX type. These colored symbols of the two-dimensional barcode are being printed within the margin of the printing layout in a white background, not visible to the end user/consumer, and preferably along the gluing zone of the paper packaging product and are being photographed, sequentially or simultaneously, as printed sheets of paper pass through printing machines (lithography or rotogravure) or as paper packaging product units pass through folding/welding machines by one or more digital cameras that are mounted on these machines, wherein such digital cameras constitute together with the arrangements triggering photographing, the computational system of decoding and of qualitative characterization of such barcode symbols and together with the electromechanical equipment of supporting and providing a power supply to the above and the electronic infrastructure of digital networking thereof, the quality control device disclosed herein.

### THE PRIOR ART

During lithographic or rotogravure printing process, the authentic colored image is being composed with sequential printing of multiple - usually four or six - monochrome, individual images obtained through analysis (separation) of the original, monochrome colored image into its composite colors. The printing of each monochrome, individual image takes place in a separate tower of a printing machine with ink being transferred from the ink container of this tower onto the sheet of paper being printed by means of appropriate tools (lithographic plates or rotogravure cylinders), such ink transfer being characterized by the spot color density, let us assume $D_C(x$-$x_C$ $y$-$y_C)$, that is the percentage of an elementary surface at every point of the sheet being printed covered by ink, wherein $(x\ y)$ is the set of points that define the surface of the paper being printed and $(x_C\ y_C)$ is the point of reference in each tower, say $C$, of the printing machine. The spot color density is being determined by the printing tool (lithographic plate, rotogravure cylinder) used in each tower of a printing machine, such tool being manufactured during the analysis (separation) of the authentic colored images into its composite colors and is being influenced by a range of print settings, such as: a) the pressure exerted by the tool on the sheet, b) the caliper of that sheet of paper - typically - deviating from the theoretical specification thereof at a percentage of the order of five percent (5%), c) the flow of ink from the ink container to the paper sheet, which is being regulated in the direction of movement of the sheet of paper, through an arrangement of taps (ink container keys), d) the color of the sheet of paper that typically deviates from the absolute white being assumed in the process of analysis of the authentic colored image into its composite colors, and e) the physical, chemical properties of the ink itself, which are drastically affected by the volumetric content of water or solvent, which content can vary in a stochastic manner, during the printing process as a defect factor of this process. The fidelity of printing of the authentic colored image on plain paper being printed during this lithographic or rotogravure printing process, on the one hand depends on the degree of compliance of the spot color density $D_C$ of each colored monochrome, individual image with the theoretical specification, let us say $D_{TC}$ thereof, as such is being calculated theoretically, in the process of analysis (separation) of the authentic colored image into its composite colors and on the other hand on the degree of alignment of the monochrome, individual images which is equivalent to the degree of coincidence of the points of reference $(x_C\ y_C)$ of each tower of the printing machine. Specifically, the deviation of the spot color density $D_C$ of each monochrome, individual image from the theoretical specification, let us say $D_{TC}$ thereof, appears in the authentic colored image as discoloration in limited or extensive areas of the sheet being printed, whilst the imperfect alignment of the monochrome, individual images causes both a generalized discoloration and also reduces the sharpness of the authentic colored image (Blur effect). At the start of the lithographic or rotogravure printing process, the operator of the respective printing machines, aided by technical means, the description of which extends beyond the scope of the present, regulates said printing parameters and aligns the towers of the printing machine with a scope of optimization of the fidelity of printing of the authentic colored image being printed onto the sheet of paper, namely to minimize the difference $D_C$ - $D_{TC}$, of the actual from the theoretical spot color density at each point $(x\ y)$ of the sheet being printed and with a scope of equalizing, $(x_1$

$y_1$) $\doteq$ ($x_2$ $y_2$) $\cdots$ ($x_C$ $y_C$) $\doteq$ ($x_o$ $y_o$), the points of reference of the towers of the printing machine. Because of variability in: a) the caliper of the sheet being printed, b) the physical, chemical properties of the ink, which are affected by the stochastic presence of water or solvent content, and c) the variation (tolerance) in the alignment of the towers of the printing machine, as well as because of other case-specific factors, the print fidelity of the authentic colored image on different sheets of paper is variable and it can be deteriorated in a stochastic or systematic manner to an extent that it will exceed the quality standards being set by the relevant specifications of the paper packaging products being produced, thereby rendering rejectable the relevant defective product units.

To address the hereinabove described problem of variability presented in the print quality, i.e. in the print fidelity of the authentic colored image in different sheets of paper, the known state of the prior art provides methods and devices for the implementation thereof, which achieve both automatic detection of paper packaging product units, the quality of which - in accordance with definitions provided hereinabove - exceeds the limits of relevant specifications and activation of automatic control systems in order to issue alerts, and - where appropriate - lead to rejection or marking of defective products.

European patent application 12386025 discloses a method of quality control in production lines of solid and corrugated carton boxes and advertising displays made of paper, wherein the above detection and rejection of defective products is being performed preferably and according to the known state of the prior art, either during the productive phase of printing per se or during the production phase of folding/gluing of the paper packaging product, which typically represents the last phase of processing of these products, by means of photographing, decoding and comparing with standard codes one or more, colored symbols of as two-dimensional barcode of the DATAMATRIX type, having a square or rectangular configuration, which symbols are printed in the margin of the print layout, within a white background, invisible to the end user/consumer and preferably along the gluing zone of the paper packaging product. Typically, these DATAMATRIX symbols are being delimited on the two sides thereof by an equivalent number of solid lines (L Finder Pattern) and on the other two sides thereof by an equal number of dotted (Clock Track) lines, comprising, let us assume $m, n$ points respectively, wherein the dotted lines define a virtual, theoretical rectangular matrix of $2 \cdot m \times 2 \cdot n$ cells, each of which encodes a single digit (bit) of binary information depending on whether the contrast of the color of the cell is higher, whereby the cell is characterized and hereinafter referred to as a dark cell, or less, whereby the cell is being characterized and hereinafter referred to as a light cell, than the threshold value, say $G_T$, which is defined and characterizes the algorithm used to decode the DATAMATRIX symbol and which takes a constant value, say $G_T$, in each particular case, or a value dependent on the average contrast of the total

of the $2 \cdot m \times 2 \cdot n$ cells, i.e. $G_T = max\{\alpha \cdot \Sigma/_{4 \cdot m \cdot n} {}^{G_i}/_{4 \cdot m \cdot n} G_{TMIN}\}$, where $G_i$ denotes the contrast of each one of the $2 \cdot m \times 2 \cdot n$ cells, $\alpha$ denotes the scalar coefficient characteristic of the decoding algorithm, with a typical value of $\alpha \approx \frac{1}{2}$ and $G_{TMIN}$ denotes the minimum value of contrast that can be decoded by the algorithm being used. In these DATAMATRIX symbols of the method of the prior art, on the one hand each one of said two solid lines and two dotted lines delimiting the DATAMATRIX symbols and on the other hand each of, let us assume $k < 2 \cdot m \times 2 \cdot n$, dark cells thereof are being printed with one of the constituent colors of printing, in a manner such that all constituent colors of printing might be used at equal - when possible - rate, i.e. the number of dark cells, let us assume $k_C$, printed in a certain color, say $C$, will if possible equal $k_C \approx k/\Sigma C$, wherein $\Sigma C$ is the total number of the constituent colors of the printing process, provided that the contrast of the brightest color component is higher than the aforementioned threshold value, say $G_T$, as such is specified by the decoding algorithm being used. These colored symbols of a two-dimensional barcode of the DATAMATRIX type are being photographed sequentially or simultaneously, decoded as the printed sheets pass through printing machines (lithography, rotogravure) or as paper packaging product units pass through folding/gluing machines by one or more digital cameras which are mounted onto these machines.

The functionality of the method of the prior art relies on the typical limitation of the algorithms used in decoding two-dimensional barcode symbols of the DATAMATRIX type according to which decoding is only possible if all dark cells of the DATAMATRIX symbol, let us assume $k < 2 \cdot m \times 2 \cdot n$, coincide with the ideal position thereof within the theoretical rectangular matrix of $2 \cdot m \times 2 \cdot n$ cells defined by the two dotted (Clock Track) lines, which delimit the DATAMATRIX symbol at an equivalent number of its sides with an accuracy of coincidence higher than one half of the dimension of the cell, i.e. decoding is only possible if the displacement, let us assume ($\Delta x_i$ $\Delta y_i$), $i \in$ [0 $k$ - 1], of each dark cell from the ideal location thereof within the theoretical matrix may take a maximum value of $\Delta x_i \leq {}^L/_{4 \cdot m}$ and $\Delta y_i \leq {}^W/_{4 \cdot n}$, wherein $L, W$ are the dimensions of the DATAMATRIX symbol. The functionality of the disclosed method is also dependent upon the ability of the device employed in the implementation thereof to compare the content of the successfully decoded DATAMATRIX symbols with standard codes that have been recorded at the start of the production process at each particular instance, such comparison being considered consistent only if all dark cells of the DATAMATRIX symbol, let us assume $k < 2 \cdot m \times 2 \cdot n$, have been imprinted on the printed sheet of paper in a way such that the contrast thereof is higher than the aforementioned threshold value, let us assume $G_T$, as such is being defined by the algorithm used for decoding. Consequently, the successful decoding of said DATAMATRIX symbols of the method disclosed in the prior art and the subsequent consistent comparison of the content thereof with standard codes recorded at the beginning of the production process necessitates on the one hand a degree of alignment between monochrome, constituent images printed consecutively in the respective towers of the printing machine that lies within the abovementioned limits, i.e. wherein $\Delta x_i \leq {}^L/_{4 \cdot m}$ and $\Delta y_i \leq {}^W/_{4 \cdot n}$, and on the other hand imprinting of the constituent colors making up the authentic colored image being printed with a spot print density, say $D_C$, that is at least enough to ensure a contrast higher than the abovementioned threshold value, say $G_T$, as such is being specified by the decoding algorithm used. Printed sheets of paper or paper packaging product units which are photographed as they pass through printing (lithography, rotogravure) or folding/gluing machines respectively and are provided with nondecodable DATAMATRIX symbols or the content of such symbols does not match standard codes being recorded at the beginning of the production process are considered defective and consequently rejectable, either because of possible shortage, or because of a large-scale alteration of the physical, chemical properties of one of the constituent colors of printing or of the parameters thereof, which correspondingly causes a large-scale reduction of the spot density and consequently of the contrast thereof, either due to imperfect alignment between the monochrome, constituent images printed consecutively in the respective towers of the printing machine.

According to the above, the detection of defective, rejectable - in accordance with the definitions provided herein above- printed sheets of paper or paper packaging product units is achieved by comparing them with one or more printed sheets of paper or one, or more, standard product units, the compliance of the qualitative characteristics of which with the prescribed standards is being certified after inspection, i.e. by successful decoding of the DATAMATRIX symbols that have been photographed during passage of the printed sheets or of the paper packaging product units through printing machines or through folding/gluing machines respectively and comparing the content thereof to standard reference codes that have been previously decoded and recorded during photographing of these certified sheets or certified units that serve as standards.

A main drawback of the prior art is the inability thereof to detect very small differences, i.e. differences in the contrast of the color less than five percent (5%) of the spot density $D_C$ of each color component of the authentic colored image being printed from the theoretically calculated value thereof, because of variability: a) of the caliper of the sheet being printed, b) the physical, chemical properties of the ink, which are influenced by the stochastic presence of water or solvent content, and c) the variability (tolerance) in the alignment of the towers of the printing machine, as well as because of other case-specific factors. Similarly, a drawback of the prior art is its inability to detect changes in the alignment between monochrome, individual images making up the overall colored image as implemented in the printing process, such changes not exceeding a certain limit, in accordance to which the decoding of the DATAMATRIX symbol is only possible if all the dark cells of each DATAMATRIX symbol coincide with the ideal position thereof within the matrix of (2mx2n) said cells with an accuracy of coincidence higher than half of the dimension of the cell.

**SUMMARY OF THE INVENTION**

The present invention discloses a method and device for the implementation thereof adapted to measuring fidelity of printing against a standard of paper packaging products, namely of solid or corrugated carton boxes for packaging food, beverages, pharmaceuticals, cosmetics and cigarettes and of advertising displays made of paper, such print fidelity characterizing the degree of perfection of the printing process during which solid or corrugated, primary or recycled, single or multiple, bleached or coloured paper, being the raw material, are being processed into these products in automatic or non-automatic (lithography or rotogravure printing machines.

Specifically, it is an object of the present to disclose a method and a device for implementing the same that on the one hand a) controls the fidelity of printing of the colors - typically four or six - that constitute the authentic colored image to be printed and on the other hand b) measures the degree of alignment between monochrome, constituent images printed consecutively in the respective towers of a printing machine, indirectly, through photographing, decoding and qualitative characterization of one or more, colored symbols of a two-dimensional barcode of the DATAMATRIX type, having a square or rectangular configuration, such symbols being printed within the sidelines of the print layout, in a white background, invisible to the end user/consumer and preferably along the gluing zone of the paper packaging product.

Typically, similarly as in the aforementioned European Patent Application 12386025, these DATAMATRIX symbols are being delimited at the two sides thereof by solid lines (L Finder Pattern) and at the other two sides thereof by an equal number of dotted (Clock Track) lines, that consist of, let us assume $m,n$ points respectively, wherein the dotted lines define a virtual, theoretical rectangular matrix of $2 \cdot m \times 2 \cdot n$ cells, each of which encodes a single digit (bit) of binary information depending on whether the contrast of the color of the cell is higher, whereby the cell is characterized and hereinafter referred to as a dark cell, or smaller, whereby the cell is being characterized and hereinafter referred to as a light cell, than the threshold value, say $G_T$, which is defined and characterizes the algorithm used to decode the DATAMATRIX symbol and which takes a constant value, say $G_T$, in each particular case, or a value dependent on the average contrast of the total of the $2 \cdot m \times 2 \cdot n$ cells, i.e. $G_T = max\{\alpha \cdot {}^\Sigma/_{4 \cdot m \cdot n} G_i, {}^{1}/_{4 \cdot m \cdot n} G_{TMIN}\}$, where $G_i$ denotes the contrast of each one of the $2 \cdot m \times 2 \cdot n$ cells, $\alpha$ denotes the scalar coefficient characteristic of the decoding algorithm, with a typical value of $\alpha \approx \frac{1}{2}$ and $G_{TMIN}$ denotes the minimum value of contrast that can be decoded by the algorithm being used. In these DATAMATRIX symbols of the herein disclosed method, on the one hand each one of said two solid lines and two dotted lines delimiting the DATAMATRIX symbols and on the other hand each of, let us assume $k < 2 \cdot m \times 2 \cdot n$, dark cells thereof are being printed with one of the constituent colors of printing, in a manner such that all constituent colors of printing might be used at equal - when possible - rate, i.e. the number of dark cells, let us assume $k_C$, printed in a certain color, say $C$, will if possible equal $k_C \approx {}^k/\Sigma C$, wherein $\Sigma C$ is the total number of the constituent colors of the printing process, provided that the contrast of the brightest color component is higher than the aforementioned threshold value, say $G_T$, as such is specified by the decoding algorithm being used. These colored symbols of a two-dimensional barcode of the DATAMATRIX type are being photographed sequentially or simultaneously, decoded as the printed sheets pass through printing machines (lithography, rotogravure) or as paper packaging product units pass through folding/gluing machines by one or more digital cameras which are mounted onto these machines and constitute together with the means for triggering photography, the computational system of decoding and qualitative characterization of the barcode symbols and the electromechanical support and power supply equipment and the electronic infrastructure of digital networking thereof the print fidelity control device disclosed herein.

The functionality of the disclosed method relies on the capacity of the device employed in the implementation thereof to measure on the one hand a) the mean value, let us assume $\overline{G_D} = \sum_{i=0}^{i=k-1} G_{D,i} \Big/ k$ of the contrast of dark cells, or the mean value, let us assume

$$\overline{G_L} = \sum_{j=0}^{j=4 \cdot m \cdot n - k - 1} G_{L,j} \Big/ 4 \cdot m \cdot n - k$$ of the contrast of bright cells, or their difference, let us assume $\overline{G} = \overline{G_D} - \overline{G_L}$ or the typical deviation in the above values, let us assume $\sigma_D = \sum_{i=0}^{i=k-1} \left| G_{D,i} - \overline{G} \right| \Big/ k$ and

$$\sigma_L = \sum_{j=0}^{j=4 \cdot m \cdot n - k - 1} \left| G_{L,i} - \overline{G} \right| \Big/ 4 \cdot m \cdot n - k$$ respectively, and on the other hand b) the typical deviation, say $\sigma_P = \sum_{i=0}^{i=k-1} \left( \Delta x_i^2 + \Delta y_i^2 \right)^{1/2} \Big/ k$ in the position of the dark cells from the ideal position thereof in the theoretical rectangular matrix of $2 \cdot m \times 2 \cdot n$ cells defined by the two dotted (Clock Track) lines, which delimit the DATAMATRIX symbol in an equivalent number of sides thereof. Consequently, the decoding of said DATAMATRIX symbols of the disclosed method and the subsequent successful comparison, say $|\overline{G} - \overline{G_{REF}}| \leq \varepsilon_G$, $|\overline{G_D} - \overline{G_{DREF}}| \leq \varepsilon_G$, $|\overline{G_L} - \overline{G_{LREF}}| \leq \varepsilon_L$, $|\sigma_D - \sigma_{DREF}| \leq \delta_D$, $|\sigma_L - \sigma_{LREF}| \leq \delta_L$ and $|\sigma_P - \sigma_{PREF}| \leq \delta_P$ of all or of some of the abovementioned qualitative characteristics thereof with standard values, say $\overline{G_{REF}}, \overline{G_{DREF}}, \overline{G_{LBEF}}, \sigma_{DREF}, \sigma_{LREF}$ and $\sigma_{PREF}$, which are recorded at the start of the production process, wherein $\varepsilon_G, \varepsilon_D, \varepsilon_L, \delta_D, \delta_L$ and $\delta_P$ are fixed parameters of the method, on the one hand means a degree of alignment between the monochrome, constituent images printed consecutively in the respective towers of the printing machine that is being limited within the abovementioned limits, i.e. $|\sigma_P - \sigma_{PREF}| \leq \delta_P$ and on the other hand imprinting of the constituent colors of the authentic colored image to be printed with a spot print density, say $D_C$, such that it creates a contrast similar to that of the standard at an extent being determined by said parameters $\varepsilon_G, \varepsilon_D$ and $\varepsilon_L$. Printed sheets of paper or paper packaging product units which are being photographed as they pass through printing (lithography, rotogravure) machines or folding/gluing machines respectively and certain of the qualitative characteristics of the DATAMATRIX symbols being decoded which do not conform to the standard values recorded at the beginning of the production process are being considered defective and consequently rejectable, either because of altering of the physical and chemical properties of one of the components of a color of printing or of the parameters of the latter, which correspondingly causes a differentiation in the spot density and consequently in their contrast, either due to imperfect alignment between the monochrome, constituent images printed consecutively in the respective towers of the printing machine. According to the above, the detection of defective, rejectable - in accordance with the definitions provided hereinabove - printed sheets of paper or paper packaging product units is being achieved by comparing them with one or more standard printed sheets of paper or one or more standard product units, the compliance of qualitative characteristics of which with the prescribed standards is being certified after inspection, i.e. by measuring the qualitative characteristics of the DATAMATRIX symbols being photographed as printed sheets or paper packaging product units pass through the printing machines or through folding/gluing machines respectively and by successful comparison of some or all of them with standard reference values, say $\overline{G_{REF}}, \overline{G_{DREF}}, \overline{G_{LREF}}, \sigma_{DREF}, \sigma_{LREF}$ and $\sigma_{PREF}$ recorded - previously - during the photographing of these sheets or of the certified units that serve as standards.

It is another object of the present invention to disclosure variant of the above method and device for the implementation thereof, that on the one hand a) controls the print fidelity of the colors - typically four or six - that constitute the authentic colored image to be printed and on the other hand b) measures the degree of alignment between the monochrome, constituent images being consecutively printed in the respective towers of the printing machine, indirectly, by means of photographing, decoding and qualitative characterization of one or more, colored two-dimensional barcode symbols of the DATAMATRIX type, having a square or rectangular configuration, which symbols are printed in the margin of the print layout in a white background, not visible to the end user/consumer, and preferably along the gluing zone of the carton product and wherein according to this variant of the aforementioned method on the one hand the two solid lines and two dotted lines delimiting the DATAMATRIX symbol and on the other hand the, let us assume $k < 2 \cdot m \times 2 \cdot n$, dark cells thereof are being printed with brighter or darker derivatives of the constituent colors used in printing, which are regulated in a way such as to exhibit a homogeneous contrast, say $\overline{G_{DREF}}$, with an almost zero standard deviation, i.e. $\sigma_{DREF} \approx 0$.

It is another object of the present invention, the disclosure of variants of the abovementioned methods and devices for the implementation thereof in which one or more colored, rectangular or square DATAMATRIX symbols are being printed in their negative version, so that on the one hand the white cells are transformed into dark ones and vice versa and on the other hand the two solid and two dotted lines delimiting the DATAMATRIX symbols are being printed in a white color hemmed by a dark colored (Quiet Zone) outline.

It is another object of the present invention the disclosure of a variant of the above methods and device for their implementation, which controls the print fidelity of the colors - typically four or six - that constitute the authentic colored image to be printed, by photographing, decoding and qualitative characterization of two colored symbols of a two-dimensional barcode of the DATAMATRIX type, having a square or rectangular configuration, such symbols being printed, one in its positive and one in its negative version, on the sidelines of the print layout, in a white background, not visible to the end user/consumer, and preferably along the gluing zone of the paper packaging product.

It is another object of the present to disclose a method and device for the implementation thereof, which uses a combination, in whole or in part the methods being disclosed hereinabove for the simultaneous control of the print fidelity of the constituent colors of the authentic colored image to be printed and of the degree of alignment between the monochrome, individual images that make up the same as attained during the lithographic or rotogravure paper printing process and which uses the decoded code of the DATAMATRIX symbols in order to identify and classify the product being produced in itself or the content it is intended for.

The disclosed method and device for implementing the same presented in this invention advantageously overcomes the drawbacks of the known prior art, since it can detect small scale differences, i.e. differences in the contrast of color of less than five percent (5%) of the spot density $D_C$ of each color component of the authentic colored image to be printed against the theoretically calculated value $D_{TC}$ thereof, because of the variability: a) in the caliper of the sheet being printed, b) the physical, chemical properties of the ink, which are affected by the stochastic presence of water or solvent content, and c) the variation (tolerance) in the alignment of the towers of the printing machine, and because of other, case-specific factors.

**BRIEF DESCRIPTION OF THE DRAWINGS**

The present invention will be made apparent to those skilled in the art by reference to the accompanying drawings in which are depicted illustrative embodiments thereof.

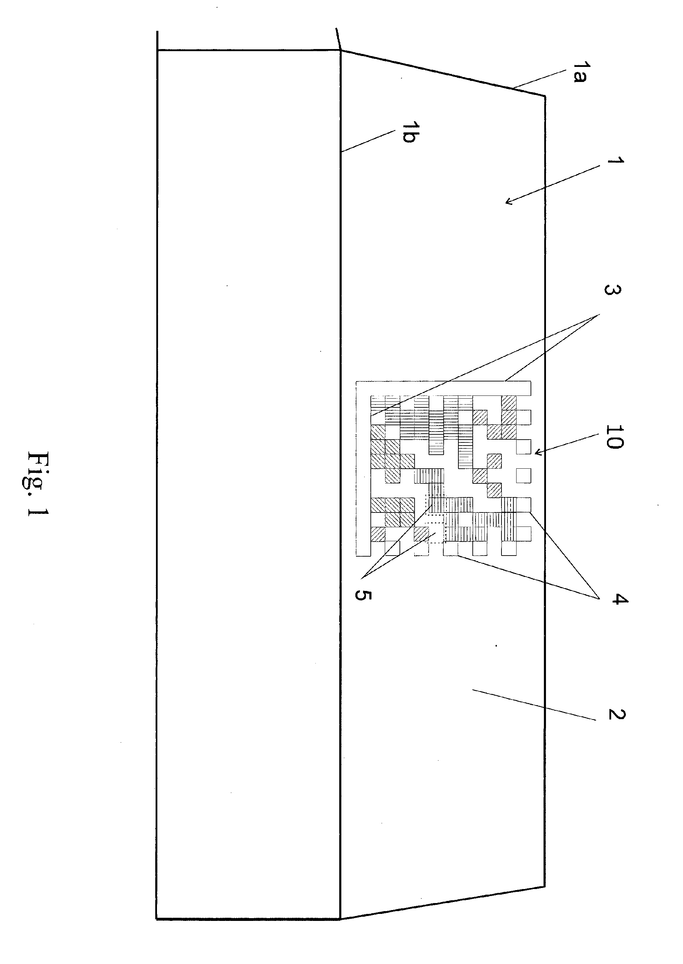

Fig. 1 shows a two-dimensional barcode symbol of the DATAMATRIX type printed within the gluing zone of a carton box.

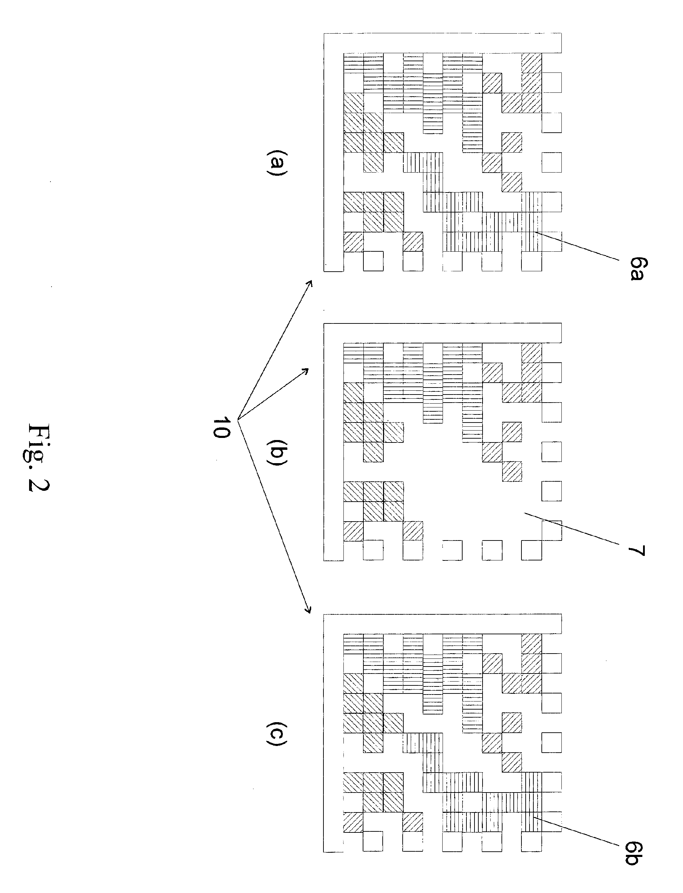

Fig. 2 shows a typical case impact on the DATAMATRIX symbol of the prior art both of the imperfect alignment of one tower of the printing machine and of the lack of ink in the ink container of this tower.

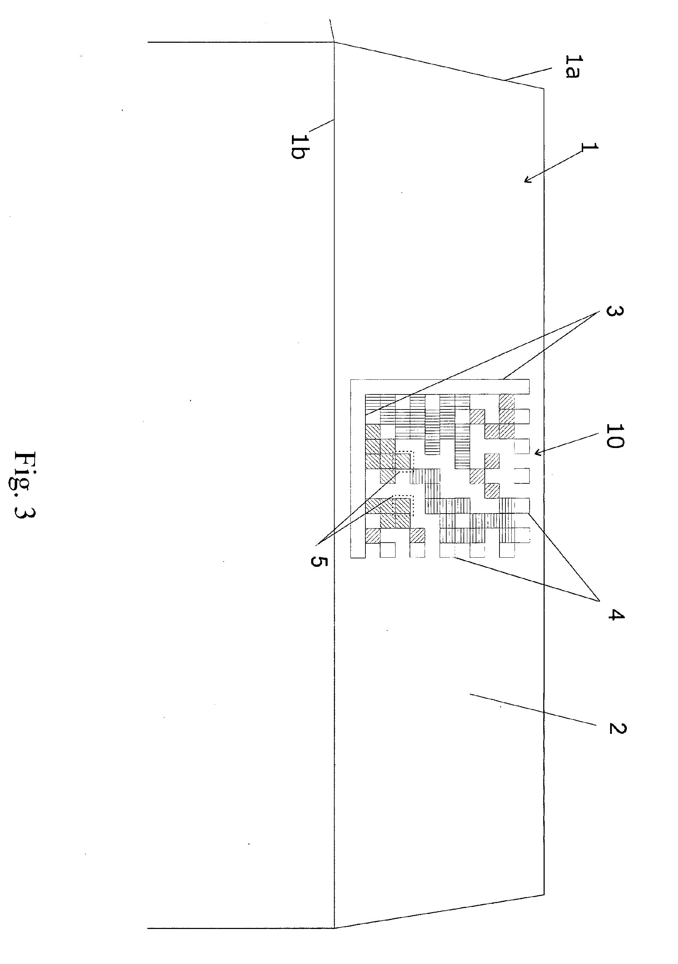

Fig. 3 shows an illustrative embodiment of the method disclosed in the present invention in which a colored, two-dimensional barcode symbol of the DATAMATRIX type, having a square configuration is being printed in the margin of the print layout in a white background, not visible to the end user/consumer with five homogenized derivatives of the equivalent authentic color components used in printing.

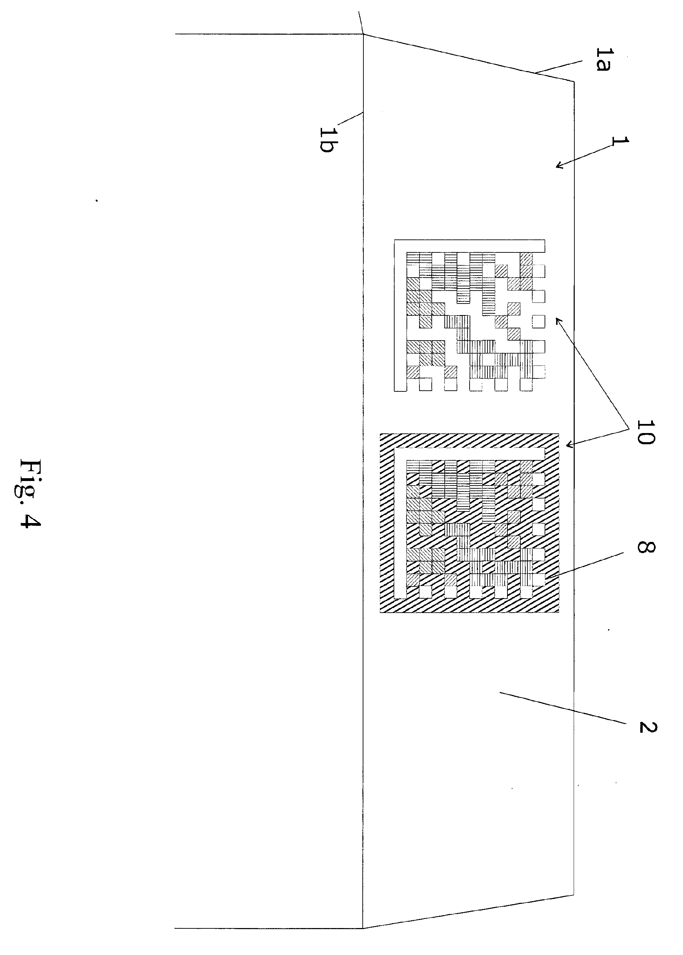

Fig. 4 shows a further illustrative embodiment of the method disclosed in the present invention in which a positive and a negative colored, two-dimensional barcode symbol of the DATAMATRIX type with a square configuration are being printed within the margin of the print layout in a white background, not visible to the end user/consumer, and preferably along the gluing zone of the paper packaging product with six homogenized derivatives of the five authentic color components used in printing.

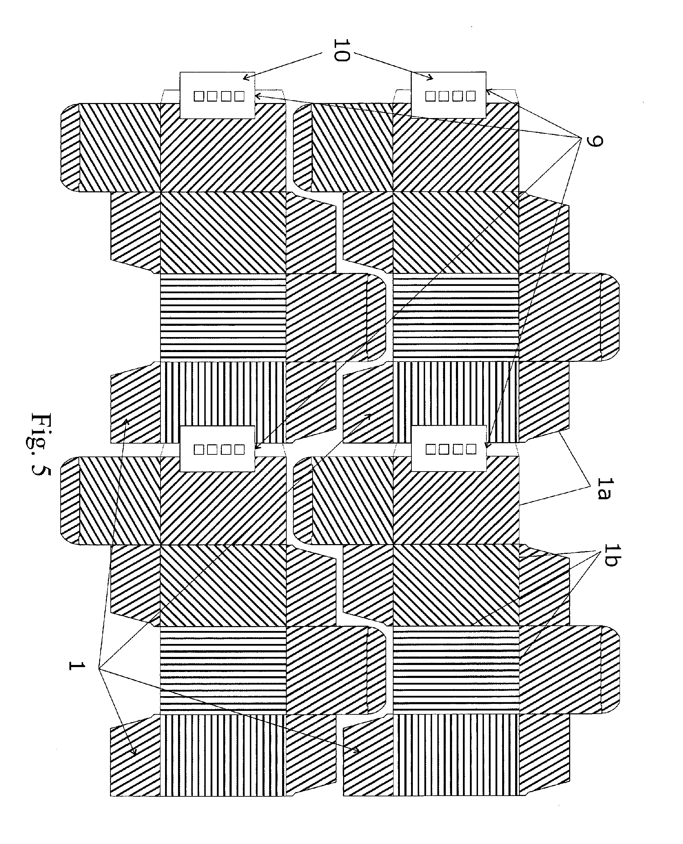

Fig. 5 presents a hypothetical printed sheet of paper with a print layout comprising four units of a packaging product, which is being photographed as it passes through a printing machine or a die-cutting machine simultaneously by four or sequentially by two digital cameras in the gluing zones of the carton boxes, wherein are located the printed DATAMATRIX symbols.

## DETAILED DESCRIPTION OF PREFERRED EMBODIMENTS

The process and tools of the invention are disclosed in detail with reference to the illustrative embodiments set forth herein and in the accompanying drawings. However, the method and the tools of the invention can be implemented in many other ways, and their interpretation is not limited to the illustrative embodiments set forth herein. Rather, these embodiments are provided only with a scope of providing a complete and thorough disclosure of the invention to those skilled in the art.

As shown in Fig. 5, an illustrative print layout as imprinted in each sheet of paper being printed comprises four identical units of a paper packaging product, i.e. of carton boxes 1, which are arranged so as to define the relative linear pattern of die-cutting of the four carton box product units, wherein the cutting lines are indicated by the reference numeral la, the folding lines by the reference numeral 1b and the gluing points of the carton boxes by the reference numeral 2.

Fig. 1 shows a two-dimensional barcode symbol of the DATAMATRIX type 10 being printed along the gluing zone 2 of carton box 1. As defined in the introductory part of the present, a typical barcode symbol of the DATAMATRIX type 10 is being delimited by two solid lines (L Finder Pattern) 3 and another two dotted (Clock Track) lines 4, comprising, let us assume $m, n$ points respectively, which dotted lines 4 define a virtual, theoretical rectangular matrix of $2 \cdot m \times 2 \cdot n$ cells 5, each of which encodes a single digit (bit) of binary information depending on whether the contrast of the color of the cell is higher than, thereby cell 5 being characterized and hereafter referred to as a dark cell or smaller the threshold value, say $G_T$, which is defined and identifies the algorithm used to decode the DATAMATRIX symbol 10, thereby cell 5 being characterized and hereasfter referred to as a light cell.

According to the prior art as described in European patent application 12386025 the aforementioned decoding algorithm of the DATAMATRIX symbol 10 in each particular case takes a constant value, say $G_T$, or a value dependent on the average contrast of all $2 \cdot m \times 2 \cdot n$ cells, i.e. $G_T = max\{\alpha \cdot {}^{\Sigma 2m \times 2n} {}^{G_i}/_{2 \cdot m \times 2 \cdot n}, G_{TMIN}\}$ where $G_i$ denotes the contrast of each one of the $2 \cdot m \times 2 \cdot n$ cells, $\alpha$ the scalar factor characteristic of the decoding algorithm, with a standard value of $\alpha \approx \frac{1}{2}$ and $G_{TMIN}$ denotes the minimum value of contrast that can be decoded by the algorithm being used. In the method disclosed in the present invention it is possible for the device employed in the implementation thereof (digital cameras photographing the colored DATAMATRIX symbols and computational system for decoding and qualitative characterization of the photographs taken of these symbols) to measure on the one hand a) the mean value, let us assume $\overline{G_D} = \sum_{i=0}^{i=k-1} G_{D,i} / k$ of the contrast of dark cells or the mean value, let us assume assume $\overline{G} = \overline{G_D} - \overline{G_L}$ or the standard deviation of these values, let us

assume $\sigma_D = \sum_{i=0}^{i=k-1} |G_{D,i} - \overline{G}| / k$ and

$$\sigma_L = \sum_{j=0}^{j=4 \cdot m \cdot n - k - 1} |G_{L,i} - \overline{G}| / 4 \cdot m \cdot n - k$$ respectively, and on the other hand b) the standard deviation, say $\sigma_P = \sum_{i=0}^{i=k-1} (\Delta x_i^2 + \Delta y_i^2)^{1/2} / k$, of the position of the dark cells from their ideal position within the theoretical rectangular matrix of the $2 \cdot m \times 2 \cdot n$ cells defined by the two dotted (Clock Track) lines 4, which delimit the DATAMATRIX symbol 10 at an equivalent number of sides thereof. The device implementing the method of the present invention performs in this way the qualitative characterization of DATAMATRIX symbols 10 enabling detection of even marginally imperfect alignment between the monochrome images that constitute the overall colored image, as well as of even marginal loss of print fidelity of the constituent colors of the authentic colored image to be printed.

Thus, in the method of the present invention, with said decoding algorithm of the DATAMATRIX symbol 10 is being achieved the decoding of the photographs of DATAMATRIX symbols 10 that have been taken and the subsequent successful comparison, say $|\overline{G} - \overline{G_{REF}}| \le \varepsilon_G$, $|\overline{G_D} - \overline{G_{DREF}}| \le \varepsilon_D$, $|\overline{G_L} - \overline{G_{LREF}}| \le \varepsilon_L$, $|\sigma_D - \sigma_{DREF}| \le \delta_D$, $|\sigma_L - \sigma_{LREF}| \le \delta_L$ and $|\sigma_P - \sigma_{PREF}| \le \delta_P$ of all or of some of the aforementioned qualitative characteristics thereof with standard values, say $\overline{G_{REF}}$, $\overline{G_{DREF}}$, $\overline{G_{LREF}}$, $\sigma_{DREF}$, $\sigma_{LREF}$ and $\sigma_{PREF}$ which are being recorded at the start of the production process, where $\varepsilon_G$, $\varepsilon_D$, $\varepsilon_L$, $\delta_D$, $\delta_L$ and $\delta_P$ are fixed parameters of the method, such successful comparison indicating on the one hand a degree of alignment between the monochrome, constituent images printed consecutively in the respective towers of the printing machine within the aforementioned maximum limits, namely $|\sigma_P - \sigma_{PREF}| \le \delta_P$ and on the other hand imprinting of the colors constituting the authentic colored image to be printed with a spot print density, say $D_C$, such that it creates a contrast similar to that of the standard at an extent being determined by the abovementioned parameters $\varepsilon_G$, $\varepsilon_D$ and $\varepsilon_L$.

In the illustrative embodiment of method disclosed in the present invention being depicted in the accompanying Fig. 1, the illustrated colored, square shaped, two-dimensional barcode symbol of the DATAMATRIX type 10, which is being printed at the gluing zone 2 of the paper packaging carton box product 1, comprises 2·5 × 2·5 = 100 cells with $k$ = 55 of these being dark and printed at an approximate equal proportion with the five color components of printing, namely $C_1$ = (0 0 0), $C_2$ = (255 0 255), $C_2$ = (0 255 255), $C_4$ = (255 255 0) και $C_5$ = (192 192 192) expressed in RGB units, these representing the color components of the print of the illustrative embodiment. The aforementioned colored DATAMATRIX symbol 10 of each paper packaging product unit is being photographed once, is being decoded and qualitatively characterized when passing thereof through the folding/gluing machine by a digital camera, which is mounted on said machine and comprising in conjunction with the photographing triggering means, the computaqtional system of decoding and of qualitative characterization of the DATAMATRIX symbol, the electromechanical equipment of support and power supply of the above and the electronic infrastructure of their digital networking, the print fidelity control device disclosed in the illustrative embodiment.

At the start of the production process, the DATAMATRIX symbols 10 of the first, say five, paper packaging product units of carton boxes 1 passing through the folding/gluing machine are being photographed, decoded and qualitatively characterized with the measurement on each one of these symbols of a) the mean value, say $\overline{G_D} = \left. \sum_{i=0}^{i=k-1} G_{D,i} \middle/ k \right.$ of the contrast of dark cells, b) the mean value, say

$\overline{G_L} = \left. \sum_{j=0}^{j=4 \cdot m \cdot n - k - 1} G_{L,j} \middle/ 4 \cdot m \cdot n - k \right.$ of the contrast of light cells, c) the difference thereof, say $\overline{G} = \overline{GD} - \overline{G_L}$, d) the standard deviation of the aforementioned

values, say $\sigma_D = \left. \sum_{i=0}^{i=k-1} \left| G_{D,i} - \overline{G} \right| \middle/ k \right.$ and

$\sigma_L = \left. \sum_{j=0}^{j=4 \cdot m \cdot n - k - 1} \left| G_{L,i} - \overline{G} \right| \middle/ 4 \cdot m \cdot n - k \right.$ respectively and e) the standard deviation, say

$\sigma_P = \left. \sum_{i=0}^{i=k-1} \left( \Delta x_i^2 + \Delta y_i^2 \right)^{1/2} \middle/ k \right.$ of the position of dark cells from their ideal position in the theoretical rectangular matrix or $2 \cdot m \times 2 \cdot n$ cells 5 being defined by the two dotted (Clock Track) lines 4, which delimit the DATAMATRIX symbol in an equivalent number of sides thereof.

After the aforementioned qualitative characteristics of the, say five, first units are successfully measured and found to be accurately consistent in between them, say $|\Delta G| \le \varepsilon_G$, $|\Delta G_D| \le \varepsilon_D$, $|\Delta G_L| \le \varepsilon_L$, $|\Delta \sigma_D| \le \delta_D$, $|\Delta \sigma_L| \le \delta_L$ and $|\Delta \sigma_P| \le \delta_P$ of the order of, say $\varepsilon_G = \varepsilon_D = \varepsilon_L$ = 1%, $\delta_D = \delta_L$ = 1% and $\delta_P$ = 0.1$mm$, the average values thereof are being calculated, say $\overline{G_{REF}}$, $\overline{G_{DREF}}$, $\overline{G_{LREF}}$, $\sigma_{DREF}$,

$\sigma_{LREF}$ and $\sigma_{PREF}$ respectively, which are being used as reference standards. The DATAMATRIX symbol 10 of each subsequent paper packaging product unit that passes through the folding/gluing machine is being photographed, decoded and characterized qualitatively. In the event that some of the values of the abovementioned qualitative characteristics are not consistent with the standard values at an appropriate level, i.e. $|\overline{G} - \overline{G_{REF}}| \le \varepsilon_G$, $|\overline{G_D} - \overline{G_{DREF}}| \le \varepsilon_D$, $|\overline{G_L} - \overline{G_{LREF}}| \le \varepsilon_L$, $|\sigma_D - \sigma_{DREF}| \le \delta_D$, $|\sigma_L - \sigma_{LREF}| \le \delta_L$ and $|\sigma_P - \sigma_{PREF}| \le \delta_P$, the paper packaging product unit is deemed defective and rejectable.

Thus the sensitivity in the signaling of a defect in the quality of imprinting of colors allows the present invention the marginal predetermined by the user of the device deviation of the order, e.g. 1% instead of the clearly much larger deviation limit of the prior art wherein any deviation is acceptable as long as all dark cells of the DATAMATRIX symbol have a contrast higher than the threshold value being determined by the decoding algorithm being used and as long as all the light cells of the DATAMATRIX symbol have a contrast smaller than the threshold value determined by the algorithm used for decoding. Correspondingly greater is the sensitivity of the device of the present invention in detecting a defect in the degree of alignment between the monochrome, partial images that make up the colored image of the resulting paper product, as with the present invention a marginal deviation predetermined by the user of the device of the order, e.g. 1% instead of the clearly very large deviation limit of the prior art wherein the decoding of each photograph obtained of colored DATAMATRIX symbols is possible (and therefore any loss of alignment is acceptable) if all the dark cells in each DATAMATRIX symbol coincide with the ideal position thereof within the matrix of (2mx2n) cells with an accuracy of concurrence higher than half the dimension of the cell. The aforementioned sensitivity of the prior art in detecting defective print quality parameters is evident in Fig. 2 wherein is being presented a typical case of the effect on the DATAMATRIX symbol of the prior art due to the imperfect alignment of a tower of the printing machine and also to the lack of ink in the ink container of this tower. Specifically in Fig. 2 is being depicted a DATAMATRIX symbol in three successive phases (a), (b), (c) wherein in phase (a) the symbol is correct and a color component thereof consisting of an array of cells 5 is denoted by reference numeral 6a. Phase (c) shows the effect on the DATAMATRIX symbol 10 of the imperfect alignment of a tower of the printing machine, as shown by the shift of the abovementioned color component now denoted by reference numeral 6b. Further in Fig. 2 (b) is shown the effect of the lack of ink from the ink container of the same abovementioned tower of the printing machine, which is set to print color component 6, and which is now absent as shown by the white area 7 that has replaced the same. These cases are indicative of an erroneous decoding or impossible to decode DATAMATRIX symbol, as well as of the allowable limits of deviation of the prior art, where in the case of Fig. 2c the symbol can not be decoded, whilst in the case of Fig. 2b, even if the symbol is decoded, the resulting code would be inconsistent with the standard.

The accompanying Figure 3 shows a further illustrative embodiment of the method disclosed in the present invention in which a colored, two-dimensional barcode DATAMATRIX type symbol 10 of a square shape is being printed in the margin of the print layout in a white background, not visible to the end user/consumer and preferably along the gluing zone of the paper packaging product 2, in which variant of the aforementioned method on the one hand the two solid lines 3 and the two dotted lines 4 which delimit the DATAMATRIX symbol 10 and on the other hand the, say $k < 2 \cdot m \times 2 \cdot n$ dark cells thereof are being printed with lighter or darker derivatives of the constituent colors of printing, which are regulated in a way such as to exhibit a homogeneous contrast, say $\overline{G_{DREF}}$, with an approximately zero standard deviation, i.e. $\sigma_{DREF} \approx 0$. This homogenization of the contrast is being achieved on the one hand in the color components whose natural contrast is higher than the value $\overline{G_{DREF}}$, by reduction of the spot density thereof, say $D_C$, and on the other hand in the other components whose natural contrast is higher than the threshold value by mixing them with the darkest color component, i.e. the component with the highest natural contrast, in relative terms, i.e. with a spot density such that the contrast of the constituent color equals the value $\overline{G_{DREF}}$. Specifically the DATAMATRIX symbol of Fig. 3 has $2 \cdot 5 \times 2 \cdot 5 = 100$ cells, wherein $k = 55$ dark ones of them are being printed in an approximately equal proportion with five (5) colors, i.e. $C_1 = (178\ 178\ 178)$, $C_2 = (255\ 125\ 255)$, $C_2 = (0\ 255\ 255)$, $C_4 = (204\ 204\ 0)$ and $C_3 = (178\ 178\ 178)$ expressed in RGB units, which correspond to an equivalent number of color components, i.e. $C_1 = (0\ 0\ 0)$, $C_2 = (255\ 0\ 255)$, $C_2 = (0\ 255\ 255)$, $C_4 = (255\ 255\ 0)$ and $C_5 = (192\ 192\ 192)$ of the printing of the illustrative embodiment depicted in Fig. 1, but which have undergone homogenization in order to exhibit a contrast equal to 30%. The homogenization of the color components $C_1, C_2, C_5$ which have a natural contrast higher than the target value, 30% is being obtained by diluting (raster) of the spot color density $D_C$ of the components. The homogenization of the color component $C_4$, having a natural contrast 11%, is being obtained by mixing the same in a degree of 19%, with the color component $C_1$, which has a natural contrast 100%.

The accompanying Fig. 4 shows a further illustrative embodiment of the method disclosed in the present invention in which a positive and a negative colored, two-dimensional barcode symbol of the DATAMATRIX type 10, being square shaped are being printed in the margin of the print layout in a white background, not visible to the end user/consumer, and preferably along the gluing zone 2 of the paper packaging carton box product 1. In this embodiment in the square DATAMATRIX symbols printed in their negative version on the one hand the white cells are being transformed into dark ones and vice versa and on the other hand the two solid lines 3 and two dotted lines 4 delineating the DATAMATRIX symbol are being printed in a white color with a dark colored outline (Quiet Zone) 8. According to the herein disclosed variant of the previously specified method, on the one hand the former white cells are being printed with the darkest color component of printing, i.e. with the component having the highest contrast, say $G_{MAX}$ and on the other hand the, say $k < 2 \cdot m \times 2 \cdot n$ former dark cells are being printed with one of the other remaining color components in a way such that all constituent colors of printing might be used at an equal - to the extent that it is possible - proportion, i.e. the number of former dark cells, say $k_C$, printed in a color, say $C$, will - if possible - equal to $k_C \approx k/(\Sigma C - 1)$, where $\Sigma C$ is the total number of constituent colors of the printing process, provided that the contrast of the darkest one of the remaining, namely of the overall second darkest color component is smaller than the abovementioned threshold value, say $\hat{G}_T$, as such is specified by the algorithm used for decoding negative DATAMATRIX symbols and typically it equals $\hat{G}_T = 1 - G_T$. The homogenization technique defined hereinabove of the contrast of the remaining - excluding the darkest one - color components of printing may be applied in this case also, having been amended in that the others - except of the darkest - color components are homogenized in a way such that their contrast is equal to say $\overline{G_{LREF}}$ with a typical deviation approximately equal to zero, i.e. $\sigma_{LREF} \approx \mathbf{0}$. In the embodiment of Fig. 4, the illustrated DATAMATRIX symbols 10 encode the word «sensap» and have $2 \cdot 5 \times 2 \cdot 5 = 100$ cells which are printed with six (6) colors, i.e. $C_1 = (0\ 0\ 0)$, $C_2 = (184\ 0\ 184)$, $C_2 = (0\ 255\ 255)$, $C_4 = (87\ 87\ 0)$, $C_5 = (178\ 178\ 178)$ and $C_6 = (77\ 77\ 77)$ expressed in RGB units, such resulting from the five (5) color components, i.e. $C_1 = (0\ 0\ 0)$, $C_2 = (255\ 0\ 255)$, $C_3 = (0\ 255\ 255)$, $C_4 = (255\ 255\ 0)$ and $C_5 = (192\ 192\ 192)$ of the printing of the illustrative embodiment of Fig. 1, but which have undergone homogenization so as to show on the one hand in the positive symbol a contrast equal to 30% and on the other hand in the negative symbol a contrast equal to 70%.

In this variant of the present invention wherein two colored symbols of a two-dimensional barcode of the DATAMATRIX type 10 are being printed, one in the positive and one in the negative version along the gluing zone 2 of the paper packaging carton box product 1, the difference of the average contrast of the symbols is being compared, say $|\overline{G_P} - \overline{G_{REFP}} - \overline{G_N} + \overline{G_{REFN}}| \leq \varepsilon_G$, wherein $\overline{G_P} = \overline{G_{DP}} - \overline{G_{LP}}$ is the difference in the average value, say $\overline{G_{DP}} = \Sigma_{i=0}^{i=k-1} G_{DP,i} \Big/ k$ of the contrast of the dark cells from the mean value, say $\overline{G_{LP}} = \Sigma_{j=0}^{j=4 \cdot m \cdot n-k-1} G_{LP,j} \Big/ 4 \cdot m \cdot n - k$ of the contrast of light cells of the positive DATAMATRIX symbol and $\overline{G_N} = \overline{GD_N} - \overline{G_{LN}}$ the difference from the mean value, say $\overline{G_{DN}} = \Sigma_{i=0}^{i=k-1} G_{DN,i} \Big/ k$ of the contrast of the dark cells from the mean value, say

$\overline{G_{LN}} = \Sigma_{j=0}^{j=4 \cdot m \cdot n-k-1} G_{LN,j} \Big/ 4 \cdot m \cdot n - k$ of the contrast of light cells of the negative DATAMATRIX symbol with their respective standard values, say $\overline{G_{REPP}}$ and $\overline{G_{RPPN}}$, recorded at the beginning of the production process.

Accompanying Fig. 5 shows an illustrative embodiment of the method disclosed in the present invention in which colored symbols of a two-dimensional barcode of the DATAMATRIX type 10, square shaped, are being printed in the margin of the print layout an indicative number of four symbols (two in the positive and two in the negative version thereof) within each frame 9 of a photograph being taken in a white background, invisible to the end user/consumer and preferably at the gluing zone 2 of the paper packaging carton box product 1. These colored DATAMATRIX symbols 10 of each paper packaging carton box product unit 1 are being photographed and decoded simultaneously as the printed sheets of paper pass through printing machines (lithography, rotogravure) by as many digital cameras as the product units, in this case four, printed onto the sheet of paper.

In another version of the illustrative embodiment depicted in Fig. 5, the colored DATAMATRIX symbols 10 of each paper packaging carton box product unit 1 are being photographed and decoded successively as the printed sheets of paper through printing machines (lithography, rotogravure) by as many digital cameras as the columns of product units, in this case two, printed onto the sheet of paper.

It is hereby noted that it is possible to use the decoded code of the DATAMATRIX symbols in order to identify and classify the product being produced in itself or the content, it is intended for.

**Claims**

1. Print fidelity control method in production lines of solid and corrugated carton boxes and advertising displays made of paper, said production line comprising successively arranged lithography or rotogravure printing machines adapted for printing onto sheets of paper one or more pieces of a final paper product, die-cutting machines for cutting the contour of one or more pieces of the final paper product (1) that has been printed on each sheet of paper and folding/gluing machines adapted for forming each of said one or more pieces into a final paper product (1) of a solid or corrugated carton box or advertising display made of paper, wherein print fidelity control comprises control of at least one of the quality parameters that characterize the degree of conformity to a certified standard relating to performance of printing, wherein the controlled quality parameters include the parameter of printing fidelity of the constituent colors of the authentic colored image and the parameter of the degree of alignment between the monochrome, individual images that compose the same as implemented in the printing process, the method comprising:

photographing colored symbols of a two-dimensional barcode of the DATAMATRIX type (10), which are printed within the margin of the printing layout of each sheet of paper onto which are printed one or more pieces of the paper product (1) being produced, each one of said colored symbols of a two-dimensional barcode of the DATAMATRIX type (10) being delimited by two solid lines (3) and another two dotted lines (4), said two dotted lines (4) consisting of (m) and (n) points and determining a matrix of (2mx2n) cells (5) within the area being defined by said two solid lines (3) and said two dotted lines (4) of each of said colored symbols of a two-dimensional barcode of the DATAMATRIX type (10), each of said cells (5) being described as dark or light depending on whether the contrast of the color thereof is respectively higher or less than a predetermined threshold value characteristic of the algorithm being used in the decoding of the symbol of the DATAMATRIX type (10), wherein the two solid lines (3) and the other two dotted lines (4) delimiting said DATAMATRIX symbol and the dark ones of said cells (5) are being printed, each, with one of the constituent colors of the colored image of the paper product (1) being produced, and controlling the parameter of the degree of alignment between monochrome, individual images making up the colored image of the paper product (1) being produced by decoding each one of the photographs taken of the colored symbols of a two-dimensional barcode of the DATAMATRIX type (10) and/or controlling the parameter of printing fidelity of the constituent colors of the authentic colored image imprinted onto the paper product (1) being produced through comparison of the successfully decoded DATAMATRIX symbols (10) with standard codes, said method **characterized in that** it further comprises:

setting standard reference values through the measurement of sample units of printed sheets of paper or units of paper packaging product units of a) the average value $\overline{G_D} = \dfrac{\sum_{i=0}^{i=k-1} G_{D,i}}{k}$ of

the contrast of the dark cells or the average value

$$\overline{G_L} = \frac{\sum_{j=0}^{j=4 \cdot m \cdot n - k - 1} G_{L,j}}{4 \cdot m \cdot n - k} \quad \text{of}$$

the contrast of light cells or the difference $\overline{G} = \overline{G_D} - \overline{G_L}$ or the standard deviation

$$\sigma_D = \frac{\sum_{i=0}^{i=k-1} |G_{D,i} - \overline{G}|}{k} \quad \text{and}$$

$$\sigma_L = \frac{\sum_{j=0}^{j=4 \cdot m \cdot n - k - 1} |G_{L,i} - \overline{G}|}{4 \cdot m \cdot n - k}$$

respectively of these values with a scope of determining standard reference values $\overline{G_{REF}}$, $\overline{G_{DREF}}$, $\overline{G_{LREF}}$ of the contrast, said standard reference values being characteristic of the print fidelity parameter of the constituent colors of printing the authentic colored image, and also of b) the standard de-

viation $\sigma_P = \dfrac{\sum_{i=0}^{i=k-1} \left( \Delta x_i^2 + \Delta y_i^2 \right)^{1/2}}{k}$ of

the position of the dark cells from their ideal position in the theoretical orthogonal matrix of $2 \cdot m \times 2 \cdot n$ cells being defined by the two dotted lines (4), which delimit the DATAMATRIX symbol (10) in an equivalent number of sides thereof with a scope of determining standard reference values $\sigma_{DREF}$, $\sigma_{LREF}$, $\sigma_{PREF}$ of standard deviation, said standard reference values being characteristic of the parameter of the degree of alignment between monochrome, individual images that make up the authentic, colored image to be printed, and

decoding and subsequent comparison of said DATAMATRIX symbols (10) for the acceptance thereof if and when the measured values of contrast, characteristic of the print fidelity parameter of the constituent colors of printing the authentic colored image are linked to said standard reference values $\overline{G_{REF}}$, $\overline{G_{DREF}}$, $\overline{G_{LREF}}$ with the relationships $|\overline{G} - \overline{G_{REF}}| \le \varepsilon_G$, $|\overline{G_D} - \overline{G_{DREF}}| \le \varepsilon_D$, $|\overline{G_L} - \overline{G_{LREF}}| \le \varepsilon_L$, and/or if and when the measured values of the standard deviation of the position of the dark or light cells from their ideal position within the theoretical orthogonal matrix of $2.m \times 2 \cdot n$ cells being defined by the two dotted lines (4), characteristic of the parameter of the degree of alignment between monochrome, individual images that make up the authentic, colored image to be printed are linked to said standard reference values $\sigma_{DREF}$, $\sigma_{LREF}$, $\sigma_{PREF}$, with the relationships $|\sigma_D - \sigma_{DREF}| \le \delta_D$, $|\sigma_L - \sigma_{LREF}| \le \delta_L$ and $|\sigma_P - \sigma_{PREF}| \le \delta_P$, where $\varepsilon_C$, $\varepsilon_D$, $\varepsilon_L$, $\delta_D$, $\delta_L$ and $\delta_P$ are constants, which are preset by the user in the application of the method.

**2.** Print fidelity control method in production lines of solid and corrugated carton boxes and advertising displays made of paper, according to claim 1, **characterized in that** the constants $\varepsilon_G$, $\varepsilon_D$, $\varepsilon_L$ are being set at an acceptable value of about 1% and the constants $\delta_D$, $\delta_L$ are being also set at an acceptable value of about 1% with $\delta_P = 0.1\,mm$.

**3.** Print fidelity control method in production lines of solid and corrugated carton boxes and advertising displays made of paper, according to claim 1, which method is **characterized in that** one or more of the DATAMATRIX symbols (10) are being printed in their positive version so that said two solid lines (3) and said other two dotted lines (4) delimiting said DATAMATRIX symbol (10) and the dark ones of said cells (5 ) are being printed, each with one of the constituent colors making up the colored image of the final product, and one or more of the DATAMATRIX symbols (10) are being printed in their negative version whereby on the one hand the light cells are being transformed to dark ones and vice versa and on the other hand the two solid lines (3) and the two dotted lines (4) delimiting said DATAMATRIX symbol (10) are being printed with a light color hemmed by a dark colored (Quiet Zone) outline (8), wherein on the one hand the former light, now dark, cells and said dark colored (Quiet Zone) outline (8) are being printed with the darkest color component used in printing, i.e. with the component having the highest contrast and on the other hand the former dark, now bright, cells, and said two solid lines (3) and two dotted lines (4) are being printed with one of the remaining color components.

**4.** Print fidelity control method in production lines of solid and corrugated carton boxes and advertising displays made of paper, according to claim 3, the method **characterized in that** on the one hand the dark cells and said two solid lines (3) and two dotted lines (4) of one or more DATAMATRIX symbols (10) printed in their positive version and on the other hand the light cells and said two solid lines (3) and two dotted lines (4) of one or more DATAMATRIX symbols (10) printed in their negative version, are being imprinted with derivatives of the color components of the authentic colored image to be printed onto the paper product (1) being produced, which derivatives are obtained by reduction of the spot density of the components or by mixing them in a way such as to exhibit a homogeneous contrast, which in the case of a positive symbol is equal to, or higher than the threshold value of the algorithm used for decoding positive symbols and in the case of a negative symbol is equal to or less than the threshold value of the algorithm used for decoding negative symbols.

5.  Print fidelity control device in production lines of solid and corrugated carton boxes and advertising displays made of paper, said production line comprising sequentially arranged lithography or rotogravure printing machines adapted for printing onto sheets of paper one or more pieces of a final paper product, die-cutting machines for cutting the contour of one or more pieces of the paper product (1) being produced and folding/gluing machines adapted to forming each of said one or more pieces into a final product of a solid or corrugated carton box or advertising display made of paper, the print fidelity control device **characterized in that** it comprises:

    one or more digital cameras mounted onto said printing machines and/or folding/gluing machines for photographing, simultaneously or sequentially, during passage through said machines of printed sheets of paper or of paper product units (1) being produced, colored two-dimensional barcode symbols of the DATAMATRIX type (10), printed in a white background, not visible to the end user/consumer, within the margin of the printing layout of each sheet of paper onto which is being printed one or more pieces of the paper product produced, wherein each of said colored two-dimensional barcode symbols of the DATAMATRIX type (10) is being delimited by two solid lines (3) and another two dotted lines (4), said two dotted lines (4) consisting of (m) and (n) points and determining a matrix of (2mx2n) cells (5) within the area delimited by said two solid lines (3) and two dotted lines (4) of each one of said colored two-dimensional barcode symbols of the DATAMATRIX type (10), each of said cells (5) being described as dark or light depending on whether the contrast of the color thereof is respectively higher or less than a predetermined threshold value characteristic of the algorithm being used in the decoding of the symbol of the DATAMATRIX type (10), wherein the two solid lines (3) and the other two dotted lines (4) delimiting said DATAMATRIX symbol and the dark ones of said cells (5) are being printed, each, with one of the constituent colors of the colored image of the final paper product;

one or more triggering arrangements adapted to trigger taking photographs (9) of said colored two-dimensional barcode symbols of the DATAMATRIX type (10) by said one or more digital cameras;

a computational system for decoding said photographs (9) taken of said colored two-dimensional barcode symbols of the DATAMATRIX type and for comparing them with standard codes;

electromechanical equipment for supporting and supplying power to said one or more digital cameras, said one or more photographing triggering arrangements and said computational system of decoding said photographs taken of colored two-dimensional bar code symbols of the DATAMATRIX type and of comparing them with standard codes, and

electronic digital networking infrastructure of said one or more digital cameras, said one or more photographing triggering arrangements and said computational system of decoding said photographs taken of said colored two-dimensional bar code symbols of the DATAMATRIX type (10) and of comparing them with standard codes, the print fidelity control device **characterized in that** said one or more digital cameras and said computational system of decoding of said photographs (9) being taken of the colored two-dimensional barcode symbols of the DATAMATRIX type and comparing them with standard codes, incorporate a system for the qualitative characterization of the two-dimensional barcode symbols of the DATAMATRIX type (10), said system for the qualitative characterization providing the capacity of detection of a marginally imperfect alignment between monochrome images that constitute the overall colored image, as well as of a marginal loss of print fidelity of the constituent colors of the authentic colored image to be printed and including:

means for performing measurements on the one hand a) of the mean value $\overline{G_D} = \sum_{i=0}^{i=k-1} G_{D,i} \Big/ k$ of the contrast of the dark cells or of the mean value $\overline{G_L} = \sum_{j=0}^{j=4 \cdot m \cdot n - k - 1} G_{L,j} \Big/ 4 \cdot m \cdot n - k$ of the contrast of the light cells or of the difference $\overline{G = G_D - G_L}$ thereof or of the standard deviation of these values $\sigma_D = \sum_{i=0}^{i=k-1} \left| G_{D,i} - \overline{G} \right| \Big/ k$ and

$$\sigma_L = \left.\sum_{j=0}^{j=4\cdot m\cdot n-k-1}\left|G_{L,i}-\overline{G}\right|\right/4\cdot m\cdot n-k$$

respectively with a scope of determining standard reference values $\overline{G_{REF}}$, $\overline{G_{DREF}}$, $\overline{G_{LREF}}$ of contrast characteristic of the parameter of print fidelity of the constituent colors of the authentic colored image, and on the other hand b) of the standard deviation $\sigma_P = \left.\sum_{i=0}^{i=k-1}\left(\Delta x_i^2+\Delta y_i^2\right)^{1/2}\right/k$ of the position of the dark cells from their ideal position within the theoretical orthogonal matrix of $2\cdot m \times 2\cdot n$ cells defined by the two dotted lines (4) delimiting the DATAMATRIX symbol (10) at an equivalent number of sides thereof, and

means for decoding and subsequent comparison of said DATAMATRIX symbols (10) for the acceptance thereof if and when the measured values of contrast, characteristic of print fidelity of the constituent colors of the authentic colored image are linked to said standard reference values $\overline{G_{REF}}$, $\overline{G_{DREF}}$, $\overline{G_{LREF}}$ with the relationships $|\overline{G} - \overline{G_{REF}}| \leq \varepsilon_G$, $|\overline{G_D} - \overline{G_{DREF}}| \leq \varepsilon_D$, $|\overline{G_L} - \overline{G_{LREF}}| \leq \varepsilon_L$ and/or if and when the measured values of standard deviation of the position of the dark or light cells from their ideal position within the theoretical orthogonal matrix of $2\cdot m \times 2\cdot n$ cells being defined by the two dotted lines (4), characteristic of the parameter of the degree of alignment between the monochrome, individual images that make up the authentic colored image being printed are linked to said standard reference values $\sigma_{DREF}$, $\sigma_{LREF}$, $\sigma_{PREF}$ with the relationships $|\sigma_D - \sigma_{DREF}| \leq \delta_D$, $|\sigma_L - \sigma_{LREF}| \leq \delta_L$ and $|\sigma_P - \sigma_{PREF}| \leq \delta_P$, wherein $\varepsilon_G$, $\varepsilon_D$, $\varepsilon_L$, $\delta_D$, $\delta_L$ and $\delta_P$ are constants, which are being preset by the user during application of the method.

Fig. 1

Fig. 2

EP 2 749 418 A1

Fig. 3

EP 2 749 418 A1

Fig. 4

Fig. 5

Europäisches
Patentamt

European
Patent Office

Office européen
des brevets

# EUROPEAN SEARCH REPORT

Application Number

EP 12 38 6026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2009 012436 A1 (OCE PRINTING SYSTEMS GMBH [DE]) 23 September 2010 (2010-09-23) * figures 1,4-6 * * paragraphs [0001], [0005], [0008], [0023], [0024], [0027], [0029] - [0032] * ----- | 1-5 | INV. B41F33/00 G06K19/06 |
| A | DE 10 2007 050691 A1 (HOCHSCHULE MANNHEIM [DE]; ROLAND MAN DRUCKMASCH [DE]) 30 April 2008 (2008-04-30) * claims 1,2,8,20 * * paragraph [0053] * ----- | 1-5 | |

TECHNICAL FIELDS
SEARCHED (IPC)

B41F
G06K

The present search report has been drawn up for all claims

| Place of search | Date of completion of the search | Examiner |
|---|---|---|
| Munich | 28 August 2013 | Hajji, Mohamed-Karim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 38 6026

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2013

| Patent document cited in search report | Publication date | Patent family member(s) | Publication date |
|---|---|---|---|
| DE 102009012436 A1 | 23-09-2010 | NONE | |
| DE 102007050691 A1 | 30-04-2008 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 12386025 A